# EUROPEAN PATENT SPECIFICATION

(11) **EP 3 614 839 B1**
(45) Date of publication and mention of the grant of the patent: **07.01.2026**
(21) Application number: 17907600.5
(22) Date of filing: 27.04.2017
(51) Int. Cl.: A01N 25/22, A01N 35/02, A01N 33/20, A01P 1/00

(54) **STABLE BIOCIDAL COMPOSITIONS**
STABILE BIOZIDE ZUSAMMENSETZUNGEN
COMPOSITIONS BIOCIDES STABLES

(43) Date of publication of application: 04.03.2020
(73) Proprietor: LANXESS Corporation, Pittsburgh, PA 15275 (US)
(72) Inventor: ZHANG, Shiling, Shanghai 201203 (CN); YUN, Dong, Shanghai 201203 (CN); SIANAWATI, Emerentiana, Collegeville, PA 19426 (US); XING, Chong, Shanghai 201203 (CN)
(74) Representative: Houghton, Mark Phillip
(86) International application number: PCT/CN2017/082115
(87) International publication number: WO 2018/195840

(56) References cited:
- EP-A1- 2 700 313
- WO-A2-2010/039923
- WO-A2-2010/138420
- CN-A- 101 875 839
- GB-A- 2 090 140
- US-A- 5 863 547
- ANONYMOUS: "Reregistration Eligibility Decision (RED) for Tris(hydroxymethyl)-nitromethane - September 1993", UNITED STATES PREVENTION, PESTICIDES EPA 738-R-93-020 ENVIRONMENTAL PROTECTION AND TOXIC SUBSTANCES, 24 January 2006 (2006-01-24), US, pages 1 - 204, XP055748281, Retrieved from the Internet <URL:https://nepis.epa.gov/Exe/ZyPURL.cgi?Dockey=20000B03.txt> [retrieved on 20201109]

## Description

The present invention relates to a stable formulation of glutaraldehyde and tris(hydroxymethyl) nitromethane and a method for using the same.

Glutaraldehyde and tris(hydroxymethyl) nitromethane have been used in combination in various applications of the art. US 8,889,679 (B2) is one such example where a synergistic combination of glutaraldehyde and tris(hydroxymethyl) nitromethane is disclosed. Although these two actives exist together in combination, it is very difficult to maintain their stability and prevent degradation of either of the actives in formulation. Thus new, stable formulations of glutaraldehyde and tris(hydroxymethyl) nitromethane are needed.

GB-A-2090140 discloses a process for obtaining a stable freeze point depressed aqueous solution comprising a dialdehyde and an aliphatic alcohol and/or polyol by adding thereto a catalytic amount of a strong acid. "Reregistration Eligibility Decision (RED) for Tris(hydroxymethyl)nitromethane September 1993", United States Prevention, Pesticides EPA 738-R-93-020, 24 January 2006, pages 1-204, XP055748281 teaches at III. A. that tris(hydroxymethyl) nitromethane is stable only under conditions of pH 5.0 and below. US-A-5863547 discloses an aqueous formula that combines a relatively low concentration of glutaraldehyde with very low concentrations of alcohol in a stabilizing alkaline buffer system.

The present invention is directed to a stable biocidal composition comprising glutaraldehyde and tris(hydroxymethyl) nitromethane, a buffer, and a solvent, and having a pH of less than 6;
wherein the buffer is an acid, salt, or combination thereof and wherein the pH of the buffer is 2.8-5; and
further wherein the solvent is selected from the group consisting of methanol, isopropanol, triethylene glycol, diproplyene glycol methyl ether, dipropylene glycol n-propyl ether, dipropylene glycol dimethyl ether, diethylene glycol methyl ether and mixtures thereof.

The present invention is further directed to a method of using the same stable biocidal composition in an application selected from the group consisting of oil production, water treatment and purification processes and systems, paper and pulp production, ballast water disinfection, other industrial processes, cooling and heating processes, latex, paint and coatings.

As used in this specification, the term "biocide" or "biocidal composition" refers both to one or more compounds capable of inhibiting microbial growth (a preservative), and one or more compounds capable of reducing microbial concentration (a disinfecting agent), within a given system. The term "antimicrobial activity" refers to the activity of the antimicrobial agents to eliminate, inhibit or prevent the growth of microorganisms. The terms "microbial organism," "microbe" and "microorganism" are used interchangeably and refer to microorganisms such as, but not limited to: fungi, bacteria, and algae. Microbes of particular interest are bacteria. The term "locus" or "loci" refers to an industrial system or product subject to contamination by microorganisms. The term "stable" means less than 10 wt% loss of biocidal active when stored under conditions of 55°C for 4 weeks or 40°C for 12 weeks. The following abbreviations are used throughout this specification: AI = active ingredient, L = liter; mL = milliliter; µL = microliter; g = grams; mol = moles; mmol = millimoles; wt% = percent by weight; mp = melting point; GA = glutaraldehyde; THNM = tris(hydroxymethyl) nitromethane. Ranges specified are to be read as inclusive, unless specifically identified otherwise.

The composition of the present invention is a stable mixture of glutaraldehyde, THNM, buffer and solvent. Conventional methods of mixing the components may be employed. The composition may be formed from simultaneously or sequentially adding one or more of the components together to form the mixture.

Glutaraldehyde is commonly available as a concentrated (e.g., 25 wt%, 50 wt%) solution in water. Members of the UCARCIDE^{™} family of glutaraldehyde antimicrobials, available from The Dow Chemical Company, are suitable for use in the present invention. Glutaraldehyde is also available neat as a colorless, slightly oily liquid.

The buffers useful to stabilize the biocidal compositions of the present invention are acid or salt compositions or combinations thereof. Suitably the buffer is the acid or salt forms of formic acid, acetic acid, oxalic acid, tartaric acid, phosphoric acid, phthalic acid, benzoic acid, boric acid, ethylenediamine tetra-acetic acid, gluconic acid, glutamic acid, glutaric acid, lactic acid, malic acid, succinic acid, hydrochloric acid, sulfuric acid and mixtures thereof. Preferably, the buffer is the acid or salt forms of formic acid, acetic acid, oxalic acid, tartaric acid, phosphoric acid or mixtures thereof. Metal salts useful in the buffers of the present invention includes, but is not limited to, sodium, potassium, magnesium, zinc, aluminum, tin, calcium, and any combination thereof. The buffer composition pH is 2.8 - 5. The pH of the final biocidal composition is less than 6.

The solvents used in the compositions of the present invention are methanol, isopropanol, triethylene glycol, dipropylene glycol methyl ether, dipropylene glycol n-propyl ether, dipropylene glycol dimethyl ether, diethylene glycol methyl ether and combinations or mixtures thereof.

The stable formulations of the present invention can be adapted for use in many applications. For example, the methods and formulations of the present invention can be used in many phases of oil production, both topside and downhole, such as in aeration towers, storage tanks, injection water, production water, pigging operations, drilling muds, completion or workover fluids, stimulation fluids, fracturing fluids and hydrotest fluids. The methods and formulations can be used in water treatment and purification processes and systems, for example to treat membranes and other system components that are susceptible to fouling. The methods and formulations can also be used in paper and pulp production, ballast water disinfection and in other industrial processes. The methods and formulations can help prevent microbial contamination of water-based fluids and systems used in cooling and heating processes. The methods and formulations can also be used to prevent microbial contamination of latex, paint and coatings. Of course, formulations of the present invention can also be used in other processes and apparatus not mentioned specifically herein.

The following examples are presented to illustrate further various aspects of the present invention, but are not intended to limit the scope of the invention in any respect.

### EXAMPLES

I.

**Table 1: Raw Materials**

| **Category** | **Ingredients** | **Supplier** |
|---|---|---|
| **Active** | GA | Dow Chemical Company |
| | THNM | Dow Chemical Company |
| **Acid Buffer** | Formic acid | Sinopharm Chemical Reagent Co., Ltd. |
| | Citric acid | Sinopharm Chemical Reagent Co., Ltd. |
| | Acetic acid | Sinopharm Chemical Reagent Co., Ltd. |
| | Oxalic acid | Sinopharm Chemical Reagent Co., Ltd. |
| | Tartaric acid | Sinopharm Chemical Reagent Co., Ltd. |
| **Salt Buffer** | Sodium acetate | Sinopharm Chemical Reagent Co., Ltd. |
| | Sodium formate | Sinopharm Chemical Reagent Co., Ltd. |
| | Sodium oxalate | Sinopharm Chemical Reagent Co., Ltd. |
| | Sodium citrate | Sinopharm Chemical Reagent Co., Ltd. |
| | Disodium phosphate | Sinopharm Chemical Reagent Co., Ltd. |
| **Solvents** Alcohol based | Methanol | Sinopharm Chemical Reagent Co., Ltd. |
| | Isopropanol (IPA) | Sinopharm Chemical Reagent Co., Ltd. |
| Glycol based | Triethylene glycol (TEG) | Sinopharm Chemical Reagent Co., Ltd. |
| Glycol ether based | Dipropylene Glycol Methyl Ether (DPM) | Dow Chemical Company |
| | Dipropylene Glycol n-Propyl Ether (DPnP) | Dow Chemical Company |
| | Dipropylene Glycol Dimethyl Ether (DMM) | Dow Chemical Company |
| | Diethylene Glycol Methyl Ether (DGM) | Dow Chemical Company |

### II. Test methods

### a) Formulation Preparation

100g of formulations containing GA, THNM, various buffers or solvents or combination of both was prepared at room temperature and shaken for approximately 10min. The formulations were divided into five 20 mL capped high density polyethylene plastic bottles for various storage conditions. One jar was stored at room temperature and the rest were stored under accelerated heat aging for certain period of times. In all the formulations, the ratios refer to the weight ratios of GA to THNM. The total active ingredients (AI) refers to total weight percentages of both GA and THNM. The data of the formulations were expressed as weight percentages of the components and the heat aging data were reported based on weight loss percentages of the actives.

### b) Heat aging test

Heat aging test was conducted under 55°C or 40°C in a Jar Mill oven (Lindberg/Blue M, Thermal Electron Corporation) for four to twelve weeks. GA/THNM percentage in the formulations before and after heat aging were measured and compared to the initial content of the actives.

### c) Measurement of GA/THNM

GA content in the formulations was measured by Reverse Phase HPLC (Agilent 1200 HPLC) and 2,4-dinitrophenylhydrazine (DNPH) based pre-column derivatization method. For a sample preparation, GA samples were prepared using 0.5N Hydrocloric acid (HCl). GA was then derivatized with 2,4-DNPH solution which was prepared by dissolving 0.5g DNPH in 50 mL acetonitrile (ACN) and acidify with 1.5 mL of 85% H₃PO₄. The derivatization was carried out for 24 hours. For HPLC analysis, two mobile phases were prepared. Mobile phase A composed of deionize water with 0.1% Trifluoroacetic acid (TFA) and B made of ACN with 0.1% TFA. The first 2.5 minutes the mobile phase was ran at 50/50 mixture and onward with 100% B. The column oven temperature is set at 30°C. The flowrate used is 1 ml/min. UV absorbance was set at 360 nm.. THNM was measured with reverse phase HPLC with UV detection at 240 nm. Five micron C-18 column was used for the analysis THNM sample was prepared with 0.5N HCl. The mobile phase composed of 95%water/5%Methanol. The flowrate used is 1 ml/min. The analysis was run at ambient temperature.

### III. Experimental examples

### Example 1: Stability of the blends in the presence of buffers

The buffers evaluated in the current invention included: formic acid-sodium formate citric acid-sodium citrate, citric acid-sodium phosphate, buffer oxalic/sodium oxalate, tartaric acid, acetic acid-sodium acetate.

The following six different buffer systems were evaluated in 1GA:2THNM ratio at the total active ratio of 45%. The results of GA and THNM loss after heat aging at 55°C for 4 weeks are summarized in Table 2 below.

**Table 2**

| **pH** | **Buffer** | **Degradation %, Glut** | **Degradation %, THNM** |
|---|---|---|---|
| 2.5 | No Buffer | 54.6 | 42.8 |
| 3.2 | Formic Acid/ Sodium Formate | 35.8 | 20.6 |
| 3.6 | Formic Acid/ Sodium Formate | 29.3 | 14.2 |
| 4 | Formic Acid/ Sodium Formate | 33.5 | 14.1 |
| 3.8 | Citric Acid/ Sodium Citrate | 20.6 | 65.4 |
| 4 | Citric Acid/ Sodium Citrate | 21.3 | 65.9 |
| 4.1 | Citric Acid/ Sodium Citrate | 23.1 | 66.6 |
| 3.4 | Citric Acid/ Disodium Phosphate | 38.5 | 28.1 |
| 3.9 | Citric Acid/ Disodium Phosphate | 32.9 | 22.4 |
| 3.3 | Oxalic Acid/ Sodium Oxalate | 37.3 | 24.7 |
| 3.6 | Tartaric Acid | 34.3 | 21.2 |
| 3.8 | Tartaric Acid | 32.4 | 18.8 |
| 2.9 | Acetic Acid/ Sodium Acetate | 38.2 | 25.2 |
| 3.3 | Acetic Acid/ Sodium Acetate | 27.2 | 16.7 |
| 3.9 | Acetic Acid/ Sodium Acetate | 27.5 | 12.9 |

With the exception of citrate buffer, all other buffers at pH range of 2.8 to 4.1 improve the stability of both GA and THNM. The level of improvement varies according to the type of buffer used. Acetate buffer, showed the best improvement at pH >3.3 followed by formate buffer at pH >3.6. Acetate buffer, is preferred for the safe handling reason in the plant environment. For this reason, further development was concentrated on the acetate buffer system.

Table 3 shows that acetate buffer continue to give good stability improvement in formulation containing GA: THNM at the ratio of 1:2 to 2:1.

**Table 3**

| Ratio GA:THNM | Total AI % | Buffer | pH | At 40°C/4 weeks | | At 40°C/12 weeks | |
|---|---|---|---|---|---|---|---|
| | | | | %GA loss | %THNM loss | %GA loss | %THNM loss |
| 1:2 | 45 | Acetic/ sodium acetate | 3.5 | 8.1 | 3.3 | 17.4 | 8.8 |
| 1:2 | 45 | | 3.7 | 7.4 | 2.3 | 14.7 | 7.9 |
| 1:2 | 45 | | 3.9 | 7.5 | 1.4 | 15.1 | 8.0 |
| 1:1 | 45 | | 3.9 | 3.4 | 4.4 | 9.9 | 8.7 |
| 2:1 | 45 | | 3.9 | 4.6 | 5.3 | 11.4 | 10.9 |

Acetate buffer alone improved the stability of the GA: THNM blend. However, the improvement did not reached the degradation target of 10% or less. Further stability improvement was still needed. The next few examples showed that specific solvents can further improve the stability of GA/THNM blend.

### Example 2: Stability of the GA: THNM blends in the presence of buffer and solvents

The examples reported below are the list of solvents that provided stability improvement of GA: THNM with degradation of each active at maximum 10%. Many other solvents evaluated that failed to provide stability with degradation of each active at maximum 10% are:
Glycol: Methoxypolyetheylene glycol at molecular weight of 200 to 1000 (200, 250, 500, 550 and 1000, GA degradation at 40°C only at 4 weeks already reached about 6%. It is expected that at 12 weeks the degradation will be over 10%); Similar GA and THNM degradation was observed in Polyethyleneglycol at molecular weight 200-600 (200, 300, 400 and 600, Tripropylene glycol (THNM degradation at 40°C only at 4 weeks already reached about 7%. It is expected that at 12 weeks the degradation will be over 10%), Neopentyl glycol (GA degradation at 40°C /12 weeks was 19% for GA and 11% for THNM); and alcohol: tert butyl alcohol (GA degradation at 40°C /12 weeks was 18% for GA and 11% for THNM).

**Table 4**

| Ratio GA:THNM | Total AI % | Acetate buffer | Solvent | pH | At 40°C/12 weeks | |
|---|---|---|---|---|---|---|
| | | | | | %GA loss | %THNM loss |
| 1:2 | 45 | yes | | 3.9 | 15.1 | 8.0 |
| 1:2 | 45 | yes | 6% MeOH | 4 | 9.9 | 8.1 |

The addition of 6% MeOH was just enough to improve the product stability to meet the below 10% degradation target.

**Table 5**

| Ratio GA:THNM | Total AI % | Acetate buffer | Solvent | pH | At 40°C/12 weeks | |
|---|---|---|---|---|---|---|
| | | | | | %GA loss | %THNM loss |
| 1:1 | 38 | yes | | 3.9 | 13.8 | 9.0 |
| 1:1 | 38 | yes | 20% IPA | 4.1 | 6.2 | 3.8 |
| 1:1 | 38 | yes | 20% MeOH | 4 | 4.3 | 3.5 |

The higher concentration of alcohol solvents such as IPA and MeOH at 20% provided increased stability. With the additional of 20% MeOH, the degradation of each active was suppressed to less than 5%.

**Table 6**

| Ratio GA:THNM | Total AI % | Acetate buffer | Solvent | pH | At 40°C/12 weeks | |
|---|---|---|---|---|---|---|
| | | | | | %GA loss | %THNM loss |
| 1:2 | 30 | yes | | 3.9 | 12.2 | 9.1 |
| 1:2 | 30 | yes | 20% MeOH | 3.8 | 3.9 | 2.9 |
| 1:2 | 30 | yes | 36% DMM | 3.9 | 4.0 | 0.5 |
| 1:2 | 30 | yes | 36% DPM | 3.9 | 4.6 | 1.6 |
| 1:2 | 30 | yes | 36% DGM | 3.9 | 4.8 | 2.0 |
| 1:2 | 30 | yes | 36% DPnP | 3.9 | 7.0 | 3.8 |
| 1:2 | 30 | yes | 36% TEG | 3.9 | 5.3 | 2.1 |

Table 6 shows that with the exception of DPnP which suppressed the degradation of actives to < 10%, many other glycol ether solvents further improve the stability of GA: THNM blends to the level of less than 5% degradation, similar to the addition of 20% MeOH.

**Table 7**

| Ratio GA:THNM | Total AI % | acetate buffer | Solvent 1 | Solvent 2 | pH | At 40°C/12 weeks | |
|---|---|---|---|---|---|---|---|
| | | | | | | %GA loss | %THNM loss |
| 1:2 | 30 | yes | no | no | 3.9 | 12.2 | 9.1 |
| 1:2 | 30 | yes | 10% DPM | 10%MeOH | 3.7 | 3.7 | 1.8 |
| 1:2 | 30 | yes | 10% DGM | 10% MeOH | 3.7 | 5.3 | 2.7 |
| 1:2 | 30 | yes | 5% DGM | 5% MeOH | 3.7 | 5.7 | 3.1 |
| 1:2 | 30 | yes | 5% DPM | 15% MeOH | 3.7 | 1.0 | 1.3 |

Table 7 shows that buffer plus blended glycol ether and alcohol (MeOH) was effective to improve the stability of GA: THNM.

**Table 8**

| GA:THNM | Total % | Acetate Buffer | Solvent | % GA loss 4w/40°C | %THNM loss 4w/40°C |
|---|---|---|---|---|---|
| 9:1 | 30 | | | 5 | 9.3 |
| | | Y | | 5.3 | 7.1 |
| | | Y | 20% MeOH | 4.8 | 5.2 |
| 6:1 | 30 | | | 4.6 | 8 |
| | | Y | | 4.8 | 5.3 |
| | | Y | 20% MeOH | 3.9 | 3.7 |
| 3:1 | 30 | | | 5.5 | 8.1 |
| | | Y | | 4.8 | 4.5 |
| | | Y | 20% MeOH | 1.5 | 0.6 |
| 1:3 | 30 | | | 10.6 | 5.8 |
| | | Y | | 2.8 | 3.2 |
| | | Y | 20% MeOH | <0.5 | <0.5 |

Table 8 shows that the composition containing buffer and alcohol solvent improved the stability GA: THNM.

**Table 9**

| GA:THNM | Total % | Acetate Buffer | Solvent | %GA loss 4w/40°C | %THNM loss 4w/40°C |
|---|---|---|---|---|---|
| 9:1 | 30 | | | 5 | 9.3 |
| | | Y | | 5.3 | 7.1 |
| | | Y | 36% DPM | 4.1 | 4.5 |
| 6:1 | 30 | | | 4.6 | 8 |
| | | Y | | 4.8 | 5.3 |
| | | Y | 36% DPM | 2.6 | 1.9 |
| 3:1 | 30 | | | 5.5 | 8.1 |
| | | Y | | 4.8 | 4.5 |
| | | Y | 36% DPM | 3 | 1.7 |
| 1:3 | 30 | | | 10.6 | 5.8 |
| | | Y | | 2.8 | 3.2 |
| | | Y | 36% DPM | <0.5 | <0.5 |

Table 9 shows that the composition containing buffer and glycol ether solvent improved the stability GA: THNM.

**Table 10**

| Formulations | Acetate buffer | Solvent | Freezing Temperature ( min 1 week storage) |
|---|---|---|---|
| | pH | | |
| 10% GA: 20% THNM | 3.9 | 36% TEG | < -20°C, (no freeze after 8 weeks) |
| 10% GA: 20% THNM | 3.9 | 36% DGM | < -20°C, (no freeze after 8 weeks) |
| 10% GA: 20% THNM | 3.7 | 10%DGM+10%MeOH | < -20°C, (No freeze after 8 weeks) |
| 10% GA: 20% THNM | 3.8 | 15%MeOH+5% DPM | ~ -30°C |
| 10% GA: 20% THNM | 3.8 | 20% MeOH | ~ -25°C |
| 10% GA: 20% THNM | 3.8 | 36% DPM | < -35°C |
| 10% GA: 20% THNM | 3.9 | | > -20°C (freeze w/i 1 week) |

Table 10 shows the addition of solvent in the blends significantly reduced freezing points of the blends.

## Claims

1. A stable biocidal composition comprising glutaraldehyde and tris(hydroxymethyl) nitromethane, a buffer, and a solvent, and having a pH of less than 6;
wherein the buffer is an acid, salt, or combination thereof and wherein the pH of the buffer is 2.8-5; and
further wherein the solvent is selected from the group consisting of methanol, isopropanol, triethylene glycol, diproplyene glycol methyl ether, dipropylene glycol n-propyl ether, dipropylene glycol dimethyl ether, diethylene glycol methyl ether, and mixtures thereof.

2. The composition of claim 1, wherein the buffer is selected from the group consisting of formic acid, acetic acid, oxalic acid, tartaric acid, phosphoric acid, phthalic acid, benzoic acid, boric acid, ethylenediamine tetra-acetic acid, gluconic acid, glutamic acid, glutaric acid, lactic acid, malic acid, succinic acid, hydrochloric acid, sulfuric acid, and mixtures thereof.

3. The composition of claim 2, wherein the buffer is selected from the group consisting of formic acid, acetic acid, oxalic acid, tartaric acid, phosphoric acid and mixtures thereof.

4. The composition of claim 2, wherein the buffer is in salt form.

5. The composition of claim 3, wherein the buffer is in salt form.

6. A method for using a stable biocidal composition comprising adding the stable biocidal composition of claim 1 in an application selected from the group consisting of oil production, water treatment and purification processes and systems, paper and pulp production, ballast water disinfection, other industrial processes, cooling and heating processes, latex, paint and coatings.

7. The method of claim 6 wherein the buffer is selected from the group consisting of formic acid, acetic acid, oxalic acid, tartaric acid, sodium acetate, sodium formate, sodium citrate, sodium oxalate, and disodium phosphate and mixtures thereof.

## Patentansprüche

1. Stabile Biozidzusammensetzung, die Glutaraldehyd und Tris(hydroxymethyl)nitromethan, einen Puffer und ein Lösungsmittel umfasst und einen pH-Wert von weniger als 6 aufweist;
wobei es sich bei dem Puffer um eine Säure, ein Salz oder eine Kombination davon handelt und wobei der pH-Wert des Puffers 2,8-5 beträgt; und
ferner wobei das Lösungsmittel aus der Gruppe bestehend aus Methanol, Isopropanol, Triethylenglykol, Dipropylenglykolmethylether, Dipropylenglykol-n-propylether, Dipropylenglykoldimethylether, Diethylenglykolmethylether und Mischungen davon ausgewählt ist.

2. Zusammensetzung nach Anspruch 1, wobei der Puffer aus der Gruppe bestehend aus Ameisensäure, Essigsäure, Oxalsäure, Weinsäure, Phosphorsäure, Phthalsäure, Benzoesäure, Borsäure, Ethylendiamintetraessigsäure, Gluconsäure, Glutaminsäure, Glutarsäure, Milchsäure, Äpfelsäure, Bernsteinsäure, Salzsäure, Schwefelsäure und Mischungen davon ausgewählt ist.

3. Zusammensetzung nach Anspruch 2, wobei der Puffer aus der Gruppe bestehend aus Ameisensäure, Essigsäure, Oxalsäure, Weinsäure, Phosphorsäure und Mischungen davon ausgewählt ist.

4. Zusammensetzung nach Anspruch 2, wobei der Puffer in Salzform vorliegt.

5. Zusammensetzung nach Anspruch 3, wobei der Puffer in Salzform vorliegt.

6. Verfahren zur Verwendung einer stabilen Biozidzusammensetzung, umfassend das Zugeben der stabilen Biozidzusammensetzung nach Anspruch 1 bei einer Anwendung, die aus der Gruppe bestehend aus Ölförderung, Wasseraufbereitungs- und -reinigungsprozessen und - systemen, Papier- und Zellstoffherstellung, Ballastwasserdesinfektion, anderen technischen Prozessen, Abkühlungs- und Erhitzungsprozessen, Latex, Anstrichmittel und Beschichtungen ausgewählt ist.

7. Verfahren nach Anspruch 6, wobei der Puffer aus der Gruppe bestehend aus Ameisensäure, Essigsäure, Oxalsäure, Weinsäure, Natriumacetat, Natriumformiat, Natriumcitrat, Natriumoxalat und Dinatriumphosphat und Mischungen davon ausgewählt ist.

## Revendications

1. Composition biocide stable comprenant du glutaraldéhyde et du tris(hydroxyméthyl)nitrométhane, un tampon et un solvant, et ayant un pH inférieur à 6 ;
dans laquelle le tampon est un acide, un sel ou une combinaison correspondante, et dans laquelle le pH du tampon est de 2,8 à 5 ; et
en outre, dans laquelle le solvant est choisi dans le groupe constitué par méthanol, isopropanol, triéthylène glycol, éther méthylique de dipropylène glycol, éther n-propylique de dipropylène glycol, éther diméthylique de dipropylène glycol, éther méthylique de diéthylène glycol et des mélanges correspondants.

2. Composition selon la revendication 1, dans laquelle le tampon est choisi dans le groupe constitué par l'acide formique, l'acide acétique, l'acide oxalique, l'acide tartrique, l'acide phosphorique, l'acide phtalique, l'acide benzoïque, l'acide borique, l'acide éthylènediaminetétraacétique, l'acide gluconique, l'acide glutamique, l'acide glutarique, l'acide lactique, l'acide malique, l'acide succinique, l'acide chlorhydrique, l'acide sulfurique et des mélanges correspondants.

3. Composition selon la revendication 2, dans laquelle le tampon est choisi dans le groupe constitué par l'acide formique, l'acide acétique, l'acide oxalique, l'acide tartrique, l'acide phosphorique et des mélanges correspondants.

4. Composition selon la revendication 2, dans laquelle le tampon est sous forme de sel.

5. Composition selon la revendication 3, dans laquelle le tampon est sous forme de sel.

6. Procédé d'utilisation d'une composition biocide stable comprenant l'ajout de la composition biocide stable selon la revendication 1 dans une application choisie dans le groupe constitué par la production d'huile, les processus et systèmes de traitement et de purification d'eau, la production de papier et de pâte à papier, la désinfection d'eau de ballast, d'autres processus industriels, les processus de refroidissement et de chauffage, le latex, la peinture et les revêtements.

7. Procédé selon la revendication 6, dans lequel le tampon est choisi dans le groupe constitué par l'acide formique, l'acide acétique, l'acide oxalique, l'acide tartrique, l'acétate de sodium, le formiate de sodium, le citrate de sodium, l'oxalate de sodium et le phosphate disodique et des mélanges correspondants.
